# EUROPÄISCHE PATENTSCHRIFT

(11) **EP 2 839 303 B1**
(45) Veröffentlichungstag und Bekanntmachung des Hinweises auf die Patenterteilung: **19.12.2018**
(21) Anmeldenummer: 13724413.3
(22) Anmeldetag: 17.04.2013
(51) Int. Cl.: G01R 31/40, H02S 50/10

(54) **VERFAHREN ZUM BESTIMMEN DER LEISTUNGSFÄHIGKEIT VON PHOTOVOLTAIKANLAGEN**
METHOD FOR DETERMINING THE PERFORMANCE OF PHOTOVOLTAIC ASSEMBLIES
PROCÉDÉ DE DÉTERMINATION DE LA CAPACITÉ DE PUISSANCE D'INSTALLATIONS PHOTOVOLTAÏQUES

(30) Priorität: 20.04.2012 EP 12165049
(43) Veröffentlichungstag der Anmeldung: 25.02.2015
(73) Patentinhaber: Vodermayer, Christian, 83119 Obing (DE)
(72) Erfinder: Vodermayer, Christian, 83119 Obing (DE)
(74) Vertreter: Wittmann, Günther
(86) Internationale Anmeldenummer: PCT/IB2013/053043
(87) Internationale Veröffentlichungsnummer: WO 2013/156943

(56) Entgegenhaltungen:
- US-A1- 2008 147 335
- US-A1- 2009 222 224
- US-A1- 2010 300 509
- US-A1- 2012 053 867

## Beschreibung

Die vorliegende Erfindung betrifft ein verbessertes Verfahren und ein verbessertes System zum Bestimmen der Leistungsfähigkeit von Photovoltaikanlagen und/oder deren Komponenten. Das erfindungsgemäße Verfahren und das erfindungsgemäße System können die Leistungsfähigkeit der Photovoltaikanlage während des laufenden Betriebs der Photovoltaikanlage bestimmen.

Eine typische Photovoltaikanlage umfasst Stränge, die etwa sieben bis zehn hintereinandergeschaltete Photovoltaikmodule aufweisen. Die Hintereinanderschaltung von Modulen ist zum Erzeugen einer höheren Spannung erforderlich, um die Verlustleistung in den Leitungen zu reduzieren, die proportional zum Quadrat des Stroms ist. Auf einem sogenannten Tisch können zwei bis zehn Stränge übereinander angeordnet sein.

Die Stränge eines Tisches oder mehrerer Tische können zu einem sogenannten Teilgenerator parallel geschaltet werden. Derzeit sind Anlagentypen mit einem sogenannten Strangwechselrichter oder einem Zentralwechselrichter bekannt.

Manche Freiflächenanlagen verfügen zum Teil über Hunderte kleinere Strangwechselrichter mit einer Leistung von etwa 10 kW. Derartige Strangwechselrichter werden verwendet, um die Auswirkungen einer partiellen Abschattung zu reduzieren oder um auch in einem hügeligen Gelände einen guten Wirkungsgrad zu erzielen.

Die meisten Photovoltaikanlagen verfügen jedoch über einen oder eine kleine Anzahl von Zentralwechselrichtern. Jeder Zentralwechselrichter kann eine oder zwei so genannte Maximal-Leistungs-Punkt-Nachverfolgungseinrichtungen (MPP-Tracker; Maximum Power Point Tracker) aufweisen. Ein Zentralwechselrichter kann eine Leistung von etwa 500 kW bis etwa 3 MW verarbeiten. Auch ein Strangwechselrichter kann eine oder zwei so genannte Maximal-Leistungs-Punkt-Nachverfolgungseinrichtungen (MPP-Tracker; Maximum Power Point Tracker) aufweisen.

Eine Maximal-Leistungs-Punkt-Nachverfolgungseinrichtung wählt einen derartigen Betriebspunkt in der Spannung-Strom-Kurve, bei dem die maximale Leistung (Produkt aus Spannung und Strom) erzeugt wird. An eine Maximal-Leistungs-Punkt-Nachverfolgungseinrichtung können ein oder mehrere Stränge angeschlossen sein. Eine typische Freiflächen-Photovoltaikanlage erzeugt eine Leistung von 5 MW und umfasst drei Zentralwechselrichter mit je zwei Maximal-Leistungs-Punkt-Nachverfolgungseinrichtungen. Ferner weist eine derartige Freiflächenanlage 7000 Stränge mit je zehn Photovoltaikmodulen, also insgesamt 70.000 Photovoltaikmodulen, auf.

Die Leistungsfähigkeit einer Photovoltaikanlage bzw. deren Komponenten wird bei sogenannten Standardtestbedingungen (Standard Test Conditions: STC) ermittelt. Die Standardtestbedingungen sind hierbei ein definierter Zustand der Umgebungsbedingungen, unter denen die Anlagenkomponenten eine bestimmte Leistungsfähigkeit aufweisen und auf welche sich typischerweise die zugesicherten Leistungsdaten der Komponentenhersteller beziehen. Dabei wird von einer Sonneneinstrahlung (insol) von 1000 W/m² und einer Luftmasse von 1,5 ausgegangen. Die Luftmasse von 1,5 definiert eine festgeschriebene spektrale Verteilung des Lichtes, welches sich bei terrestrischen Messungen in bestimmten Breitengraden, Bodenhöhen, Neigungsebenen und Atmosphärenzusammensetzungen ergeben kann. Ferner umfassen die Standardtestbedingungen eine Modultemperatur von 25°C (Tgen).

Bekannte Verfahren zum Messen der Leistung von Freiflächen-Photovoltaikanlagen ermitteln komplette Spannung-Strom-Kennlinien in Durchlassrichtung an einer Maximal-Leistung-Punkt-Nachverfolgungseinrichtung. Folglich erfordert jede Messung das Abklemmen des zu vermessenden Anlagenteils und nimmt somit mehrere Minuten in Anspruch. Aus wirtschaftlichen Gründen müssen mehrere Stränge, die parallel geschaltet sind, gemeinsam gemessen werden. Daher ist die Messung der kompletten Anlage nur auf Teilgeneratorebene wirtschaftlich möglich. Diese Verfahren haben den Nachteil, dass Probleme in einzelnen Strängen nicht erkannt werden. Diese Verfahren können auch den Nachteil aufweisen, dass zu viele Module unnötigerweise ausgewechselt werden, falls eine zu niedrige Leistung ermittelt wird. Ferner hat dieser Stand der Technik den Nachteil, dass die Photovoltaikanlage während der Prüfung der Leistungsfähigkeit keinen oder nur einen stark reduzierten Strom ins Netz speisen kann. Das häufige Anstecken und Abstecken von Kabeln kann zu Fehlern führen, die die Leistung der Photovoltaikanlage weiter reduzieren oder Komponenten derselben gar beschädigen. Ferner ist das häufige Abstecken und Anstecken von Kabeln aus Gründen der Arbeitssicherheit kritisch, da in derartigen Photovoltaikanlagen in den einzelnen Strängen vergleichsweise hohe Spannungen auftreten.

Die US 2008/0147335 A1 offenbart ein Überwachungssystem und ein Verfahren zum Überwachen der Leistungsfähigkeit von einzelnen Stromquellen in einem verteilten Stromquellensystem.

Die Erfindung stellt sich zur Aufgabe, ein verbessertes Verfahren und eine verbesserte Vorrichtung zum Bestimmen der Leistungsfähigkeit einer Photovoltaikanlage zu schaffen.

Der Aufgabe der Erfindung wird durch ein Verfahren gemäß Anspruch 1 gelöst.

Das erfindungsgemäße Verfahren zum Bestimmen der Leistungsfähigkeit von Komponenten einer Photovoltaikanlage und/oder der Photovoltaikanlage, die eine Mehrzahl von Strängen aufweist, in denen je eine Mehrzahl von Photovoltaikmodulen in Serie geschaltet ist, wobei die Mehrzahl von Strängen an zumindest einen Wechselrichter angeschlossen ist, umfasst die Schritte des Erzeugens von Referenzdaten, des Erzeugens von Individualdaten und des Auswertens der Referenzdaten und der Individualdaten. Der Schritt des Erzeugens von Individualdaten wird im gleichen Zeitraum wie der Schritt des Erzeugens von Referenzdaten durchgeführt. Die Leistungsfähigkeit kann die elektrische Leistung, der Wirkungsgrad, der erzeugte Strom, die erzeugte Spannung und dergleichen durch die einzelnen Komponenten der Photovoltaikanlage und/oder durch die Photovoltaikanlage insgesamt sein. Der Ausdruck Komponenten kann einzelne Bauteile der Photovoltaikanlage und/oder Teilbereiche, beispielsweise weitgehend autarke oder hierarchische Teilbereiche, Teilbereiche, die einem Strangwechselrichter zugeordnet sind, etc. umfassen.

Der Schritt des Erzeugens von Referenzdaten kann das Ermitteln einer Spannung über einen ersten Referenzstrang aufweisen. Die Spannung kann an einem Strangwechselrichter, an einen Zentralechselrichter und/oder an einer Maximal-Leistungs-Punkt-Nachverfolgungseinrichtung erfasst werden. Die Spannung kann an einer Leitung erfasst werden, die mit dem Zentralwechselrichter und/oder einer Maximal-Leistungs-Punkt-Nachverfolgungseinrichtung elektrisch verbundenen ist. Die Spannung kann an einer Leitung erfasst werden, welche mit dem ersten Referenzstrang elektrisch verbunden ist.

Die Photovoltaikanlage kann während der Ermittlung der Leistungsfähigkeit einen derartigen Strom und eine derartige Spannung erzeugen, dass sich die Komponenten der Photovoltaikanlage und/oder die Photovoltaikanlage im Wesentlichen am Maximal-Leistungs-Punkt befinden. Somit wird durch die Bestimmung der Leistungsfähigkeit das Einspeisen in das Netz nicht unterbrochen. Bei mehreren Wechselrichtern pro Photovoltaikanlage können sich alle Maximal-Leistungs-Punkt-Nachverfolgungseinrichtungen im Wesentlichen am Punkt der maximalen Leistung befinden. Die Photovoltaikanlage kann während des Prüfens der Leistungsfähigkeit die normale Leistung in das Netz abgeben. Ferner muss die Beschaltung der Komponenten der Photovoltaikanlage nicht zum Prüfen der Leistungsfähigkeit geändert werden. Der Ausdruck im Wesentlichen umfasst den üblichen Regelfehler und dergleichen einer Maximal-Leistungs-Punkt-Nachverfolgungseinrichtung. Die Maximal-Leistungs-Punkt-Nachverfolgungseinrichtung stellt den Arbeitspunkt entlang der Spannungs-/Strom-Kennlinie ein. Da sich die Leistung der Photovoltaikmodule aufgrund der wechselnden Sonneneinstrahlung ständig ändert, muss die Maximal-Leistungs-Punkt-Nachverfolgungseinrichtung den Arbeitspunkt permanent neu ermitteln. Dadurch ergeben sich Regelschwingungen. Ferner ergeben sich Fehler, da nicht alle parallel geschaltete Stränge die gleichen Betriebsbedingungen (Sonneneinstrahlung, Temperatur etc.) aufweisen sowie deren elektrische Eigenschaften aufgrund von Herstellungsschwankungen variieren. Ferner ergeben sich Fehler, die aufgrund mehrerer lokalen Leistungsmaxima sowie Fehleinstellungen der Maximal-Leistungs-Punkt-Nachverfolgungshardware und -software entstehen.

Der Schritt des Erzeugens von Individualdaten kann die Schritte des Ermittelns eines Stroms, der in einem Messstrang einer Mehrzahl von Messsträngen fließt, und das Ermitteln eines Schätzwertes der Sonneneinstrahlung, die zumindest einem Photovoltaikmodul des Messstranges während der Ermittlung des Stroms in dem jeweiligen Messstrang zugeordnet ist, aufweisen. Der Schritt des Erzeugens von Individualdaten wird für eine Mehrzahl von Messsträngen durchgeführt. Die Individualdaten werden sukzessive für jeden der Mehrzahl von Messsträngen ermittelt. Mit anderen Worten, die Individualdaten werden nacheinander für weitere Messstränge der Mehrzahl von Messsträngen ermittelt. Der Strom kann mittels induktiver Verfahren, beispielsweise einer Stromzange, ermittelt werden, so dass es nicht notwendig ist, den Strang zu öffnen.

Der Strom in dem jeweiligen Messstrang kann ermittelt werden, indem eine Stromzange um eine stromführende Leitung des Messstranges angebracht wird. Der Schätzwert der Sonneneinstrahlung kann bestimmt werden, indem an einem Photovoltaikmodul, das sich in dem Strang befindet, von dem der erzeugte Strom ermittelt wird, ein Sensor angeordnet wird. Beispielsweise kann ein Sensor oder eine monokristalline Referenzzelle parallel zur Ebene eines Photovoltaikmoduls des Messstranges am Photovoltaikmodul angeordnet werden. Die Stromzange und die monokristalline Referenzzelle können sukzessive an weiteren Messsträngen angeordnet werden, wenn die Messung am vorhergehenden Messstrang abgeschlossen ist.

Das Ermitteln der Referenzdaten und/oder das Ermitteln der Individualdaten kann den Schritt des Ermittelns der Temperatur zumindest eines Photovoltaikmoduls aufweisen. Die Temperatur kann mittels eines Thermometers ermittelt werden, das mit dem Photovoltaikmodul mechanisch gekoppelt wird. Die Temperatur kann beispielsweise mittels eines Messfühlers des Typs PT100 ermittelt werden. Die Temperatur beeinflusst den Wirkungsgrad eines Photovoltaikmoduls.

Der Schritt des Auswertens der Referenzdaten und der Individualdaten umfasst den Schritt des Prüfens, ob sich die Referenzdaten innerhalb eines Referenztoleranzbandes befinden und/oder ob sich Individualdaten während eines vorbestimmten Zeitintervalls innerhalb eines Individualtoleranzbandes befinden. Durch diesen Schritt kann beispielsweise geprüft werden, ob die Daten konsistent sind oder ob sie sich in einem zulässigen Bereich befinden. Durch diesen Schritt werden die Stabilitätsbedingungen der Messung und Plausibilitätsbedingungen geprüft, aufgrund deren entschieden wird, ob die gewonnenen Referenzdaten und Individualdaten für die Auswertung verwendet werden können. Es kann eine zeitliche Koordination durchgeführt werden. Ferner kann geprüft werden, ob die Sonneinstrahlung größer als ein vorbestimmter Schwellenwert ist. Es kann die räumliche Homogenität geprüft werde, falls mehrere Referenzdatenermittlungseinrichtungen vorhanden sind. Darüber hinaus kann die zeitliche Homogenität der Sonneneinstrahlung, der Spannung und des Stroms während eines Messintervalls geprüft werden. Falls sich die Referenzdaten während eines vorbestimmten Zeitintervalls innerhalb des Referenztoleranzbandes befinden und/oder sich die Individualdaten während eines vorbestimmten Zeitintervalls innerhalb des Individualtoleranzbandes befinden, wird die Leistungsfähigkeit von Messsträngen ermittelt, deren Ströme während des vorbestimmten Zeitintervalls ermittelt wurden. Der Schritt des Auswertens der Referenzdaten und der Individualdaten kann mehr oder weniger gleichzeitig mit dem Schritt des Erzeugens der Referenzdaten und des Erzeugens der Individualdaten ausgeführt werden. Es ist aber auch möglich, die Referenzdaten und die Individualdaten während eines ersten Zeitraumes zu ermitteln und abzuspeichern und anschließend in einem späteren Zeitraum die Referenzdaten und die Individualdaten auszuwerten.

Im Gegensatz zum Stand der Technik ermittelt das erfindungsgemäße Verfahren keine Spannung-Strom-Kennlinie sondern die Ströme in jedem einzelnen Strang, beispielsweiseweise mittels Stromzangen. Daher müssen bei dem erfindungsgemäßen Verfahren die Stränge nicht abgeklemmt werden und das Verfahren lässt sich schneller durchführen. Die Testbedingungen, beispielsweise die Temperatur des Photovoltaikmoduls, die Sonneneinstrahlung und die Spannung der Maximal-Leistungs-Punkt-Nachverfolgungseinrichtung werden, separat erfasst und dienen dazu, dass die erfassten Werte, beispielsweise Ströme und Spannung, auf die Standardtestbedingungen umgerechnet werden, können die Leistungsfähigkeit der erfassten Stränge ermittelt und damit ein besseres Vergleichen der erfassten Werte möglich ist. Weiterhin können die so gewonnenen Ergebnisse zusammengefasst werden und damit Rückschlüsse auf den geprüften Anlagenteil, die Gesamtheit der Anlage oder die Funktions- und Leistungsfähigkeit von Anlagenkomponenten liefern.

Der Schritt des Ermittelns von Strom kann den Schritt des gleichzeitigen Ermittelns von Strömen umfassen, die in mehreren Messsträngen der Mehrzahl von Messsträngen fließen, wobei der Schritt des gleichzeitigen Ermittelns von Strömen nacheinander in mehreren weiteren Messsträngen der Mehrzahl von Messsträngen durchgeführt wird. Die in mehreren Messsträngen fließenden Ströme können gleichzeitig und unabhängig voneinander gemessen bzw. erfasst werden. Beispielsweise können mehrere Stromzangen verwendet werden, mit denen die Ströme in unterschiedlichen Messsträngen gleichzeitig gemessen bzw. erfasst werden können. Ist die Strommessung in einem jeweiligen Messstrang abgeschlossen, kann eine der Stromzangen zu einem anderen Strang gebracht werden und den Strom in diesem Messstrang messen bzw. erfassen, und zwar unabhängig von den anderen Stromzangen.

Der Schritt des Erzeugens von Referenzdaten kann ferner das Ermitteln eines Stroms, der in einem ersten Referenzstrang fließt, das Ermitteln eines Stroms, der in einem zweiten Referenzstrang fließt, das Ermitteln einer Spannung über einen zweiten Referenzstrang, das Ermitteln der Temperatur zumindest eines Photovoltaikmoduls in dem zweiten Referenzstrang und/oder in einem zweiten Messstrang, das Ermitteln eines Schätzwertes der Sonneneinstrahlung, der auf zumindest ein Photovoltaikmodul in dem ersten Referenzstrang auftrifft, und/oder das Ermitteln eines Schätzwertes der Sonneneinstrahlung, der auf zumindest ein Photovoltaikmodul in dem zweiten Referenzstrang auftrifft, aufweisen. Hiermit werden die Referenzdaten redundant erzeugt. Zum einen können die redundant erzeugten Referenzdaten auf Konsistenz geprüft werden. Ferner können die räumliche Homogenität der Sonneneinstrahlung und der Temperatur der Photovoltaikmodule geprüft werden. Zum anderen muss die Messung nicht wiederholt werden, wenn einzelne Schritte zum Erzeugen der Referenzdaten fehlschlagen.

Das Ermitteln von Referenzdaten kann das Ermitteln von Wetterdaten und/oder das Ermitteln der absoluten Sonneneinstrahlung umfassen. Die Wetterdaten können die Windrichtung, die Windgeschwindigkeit, die Lufttemperatur, die Luftfeuchte, den Luftdruck etc. umfassen. Diese Wetterdaten können für die Auswertung der Temperaturen des Photovoltaikmoduls, beispielsweise mittels Interpolationsverfahren, verwendet werden. Der Schritt der Ermittlung der absoluten Sonneneinstrahlung kann mittels eines Pyranometers oder anderer meteorologischer Messinstrumente mit hoher Kalibriergenauigkeit erfolgen. Weiterhin können mehrere Einstrahlungsmesseinrichtungen verwendet werden, um Wolkenzüge und wetterbedingte Einstrahlungsinhomogenitäten über zu vermessene Anlagenteile überwachen.

Die zuvor erwähnten Schätzwerte der Sonneneinstrahlung, die zumindest einem Photovoltaikmodul in einem Referenzstrang bzw. in einem Messstrang zugeordnet sind, dienen dazu, dass abgeschätzt werden kann, welche relative Sonneneinstrahlung auf ein Photovoltaikmodul verglichen mit einem anderen Photovoltaikmodul fällt. Hierdurch können ein hügeliges Gelände und/oder Winkeldifferenzen der Photovoltaikmodule in zumindest einem Referenzstrang und in zumindest einem Messstrang berücksichtigt und kompensiert werden. Das Ermitteln der absoluten Sonneneinstrahlung kann auch dazu dienen, die Extrapolation auf Standardtestbedingungen zu gewährleisten bzw. zu verbessern.

Der Schritt des Ermittelns einer Spannung über einen ersten und/oder zweiten Referenzspannungswert kann den Spannungswert an der jeweiligen Maximal-Leistungs-Punkt-Nachverfolgungseinrichtung oder an einer damit elektrisch verbundenen Leitung ermitteln. Die Maximal-Leistungs-Punkt-Nachverfolgungseinrichtung kann einem Strangwechselrichter oder einem Zentralwechselrichter zugeordnet sein, wobei ein Zentralwechselrichter mehrere Maximal-Leistung-Punkt-Nachverfolgungseinrichtungen aufweisen kann.

Der Schritt des Ermittelns von Individualdaten kann ferner den Schritt des Eingebens von Daten aufweisen, die eine Zuordnung des Messstranges zu dem ermittelten Strom, der in dem jeweiligen Messstrang fließt, ermöglichen. Beispielsweise kann am Messstrang ein Barcode oder ein Matrixcode angeordnet sein, der mittels eines Scanners ausgewertet wird. Die Nummer und/oder die Bezeichnung des Messstranges kann auch mittels einer Tastatur eingegeben werden. Ferner kann die Position des Messstranges ermittelt werden, beispielsweise über GPS.

Der Schritt des Ermittelns von Referenzdaten kann ferner das Ermitteln der Spannung an einem Strangwechselrichter umfassen. Es versteht sich, dass die Spannung mehrerer Strangwechselrichter erfasst werden kann. Dieser Schritt kann erforderlich sein, wenn mehrere Strangwechselrichter vorhanden sind. Ferner können lokal variierende Betriebsbedingungen, beispielsweise aufgrund hügeligen Geländes, berücksichtigt werden.

Der Schritt des Auswertens der Individualdaten und/oder der Referenzdaten kann den Schritt des Normierens der erfassten Referenzdaten und/oder der erfassten Individualdaten umfassen, wobei die Bestimmung der Leistungsfähigkeit der Photovoltaikanlage und/oder der Komponenten der Photovoltaikanlage auf Grundlage der normierten Referenzdaten und/oder der normierten Individualdaten erfolgt. Dadurch kann die Leistungsfähigkeit der Komponenten der Photovoltaikanlage exakter überprüft werden.

Der Schritt des Auswertens der Referenzdaten und/oder der Individualdaten kann den Schritt des Umrechnens der erfassten Referenzdaten und/oder der erfassten Individualdaten bzw. erfassten Daten auf Standard-Test-Bedingungen umfassen. Der Ausdruck "Umrechnen auf Standard-Test-Bedingungen" kann beispielsweise so interpretiert werden, dass die erfassten bzw. geschätzten Werte so umgerechnet werden, dass sich Werte ergeben, die erfasst bzw. geschätzt würden, falls die Standardmessbedingungen herrschen würden. Die Bestimmung der Leistungsfähigkeit der Photovoltaikanlage und/oder der Komponenten der Photovoltaikanlage kann auf Grundlage der in die Standard-Messbedingungen umgerechneten Referenzdaten und/oder auf Grundlage der in die Standard-Messbedingungen umgerechneten Individualdaten erfolgen. Es versteht sich, dass auch eine andere Art der Umrechnung möglich ist.

Die Schritte des Erzeugens von Referenzdaten können mittels einer oder mehrerer computerimplementierten Vorrichtung(en) durchgeführt werden. Auch die Schritte des Erzeugens von Individualdaten können mittels einer oder mehrerer computerimplementierter Vorrichtung(en) ausgeführt werden. Schließlich können die Schritte des Auswertens der Referenzdaten und Individualdaten mittels einer oder mehrerer computerimplementierter Vorrichtungen durchgeführt werden.

Es zeigen:
Figur 1 schematisch eine erste Variante einer Photovoltaikanlage mit einem Wechselrichter;
Figur 2 zeigt eine zweite Variante einer Photovoltaikanlage mit drei Wechselrichtern;
Figur 3 zeigt eine schematische Darstellung einer Referenzdatenermittlungseinrichtung;
Figur 4 zeigt eine schematische Darstellung einer Individualdatenermittlungseinrichtung; und
Figur 5 zeigt eine schematische Darstellung einer Auswerteeinrichtung.

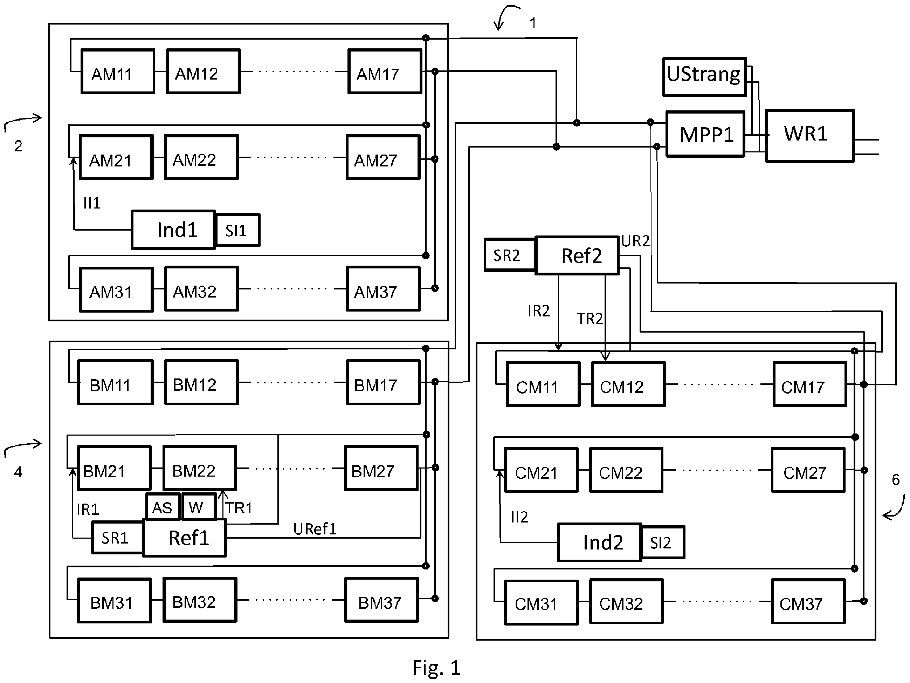

Figur 1 zeigt eine erste Variante einer Photovoltaikanlage 1 mit einem ersten Teilbereich 2, einem zweiten Teilbereich 4 und einem dritten Teilbereich 6, die an einer Maximal-Leistungs-Punkt-Nachverfolgungseinrichtung MPP1 und an einen Wechselrichter WR1 angeschlossen sind. Der erste Teilbereich umfasst drei Stränge, die parallel geschaltet sind, wobei jeder Strang sieben Photovoltaikmodule AM11 - AM17, AM21 - AM27, AM31 - AM37 aufweist. Der zweite Teilbereich weist drei parallel geschaltete Stränge mit je sieben in Reihe geschalteten Photovoltaikmodulen BM11 - BM17, BM21 - BM27, BM31 - BM37 auf. Der dritte Teilbereich 6 weist drei parallel geschaltete Stränge mit sieben in Reihe geschalteten Photovoltaikmodulen CM11 - CM17, CM21 - CM27, CM31 - CM37 auf.

Die Teilbereiche 2, 4, 6 können Tische sein. Es ist aber auch denkbar, dass die Teilbereiche mehrere Tische umfassen.

Die drei Teilbereiche 2, 4, 6 sind elektrisch parallel geschaltet und an die Maximal-Leistungs-Punkt-Nachverfolgungseinrichtung MPP1 angeschlossen. Die Maximal-Leistungs-Punkt-Nachverfolgungseinrichtung 1 regelt die von den Strängen mit den Photovoltaikmodulen gelieferten Strom und die davon gelieferte Spannung so, dass das Produkt aus Spannung und Strom, die bzw. der von den Photovoltaikmodulen erzeugt wird, maximiert wird, wodurch die Ausgangsleistung der Photovoltaikanlage maximiert wird. Die Maximal-Leistungs-Punkt-Nachverfolgungseinrichtung MPP1 ist an den Wechselrichter WR1 angeschlossen. Der Wechselrichter gibt den erzeugten Strom schließlich an das öffentliche Netz (nicht gezeigt) ab.

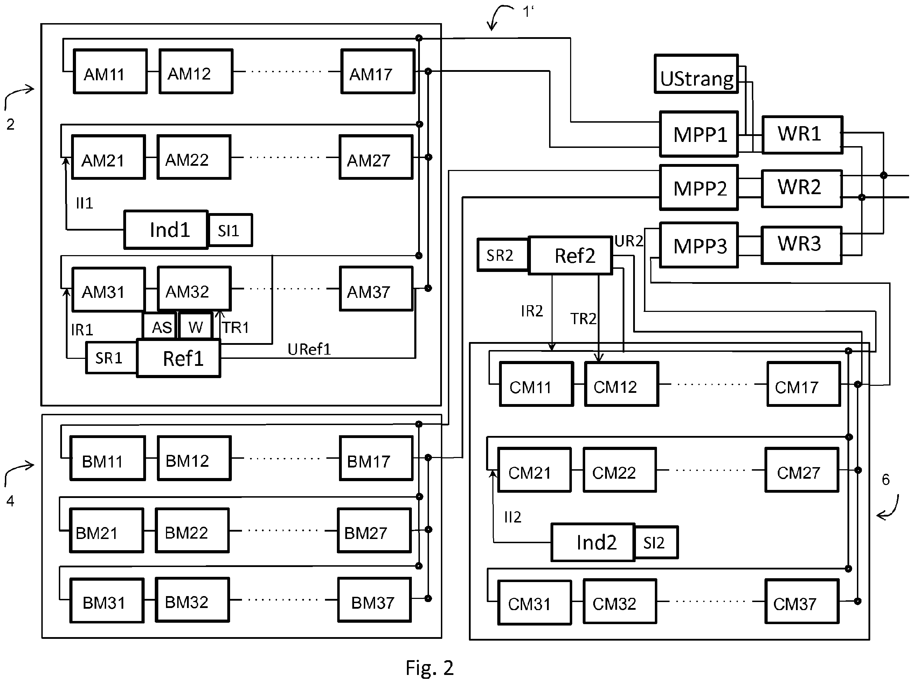

Figur 2 zeigt eine zweite Variante einer Photovoltaikanlage 1'. Die zweite Variante umfasst mehrere Teilbereiche 2, 4, 6, wie zuvor hinsichtlich der ersten Variante von Figur 1 beschrieben wurde. Jeder Teilbereich 2, 4, 6 umfasst eine Mehrzahl parallel geschalteter Stränge, die je eine Mehrzahl von in Serie geschalteten Photovoltaikmodulen aufweisen.

Im Gegensatz zu der Variante gemäß Figur 1 weist die Variante gemäß Figur 2 eine Mehrzahl von Maximal-Leistungs-Punkt-Nachverfolgungseinrichtungen MPP1, MPP2, MPP3 und eine Mehrzahl von Wechselrichtern WR1, WR2, WR3 auf. Die erste Maximal-Leistungs-Punkt-Nachverfolgungseinrichtung 1 ist an den ersten Wechselrichter WR1, die zweite Maximal-Leistungs-Punkt-Nachverfolgungseinrichtung MPP2 ist an den zweiten Wechselrichter WR2 und die dritte Maximal-Leistungs-Punkt-Nachverfolgungseinrichtung MPP3 ist an den dritten Wechselrichter WR3 angeschlossen. Die Ausgänge der Wechselrichter WR1, WR2, WR3 sind parallel geschaltet und mit dem öffentlichen Netz (nicht gezeigt) verbunden.

Der erste Teilbereich 2 ist an die erste Maximal-Leistungs-Punkt-Nachverfolgungseinrichtung MPP1, der zweite Teilbereich 4 ist an die zweite Maximal-Leistungs-Punkt-Nachverfolgungseinrichtung MPP2 und der dritte Teilbereich 6 ist an die dritte Maximal-Leistungs-Punkt-Nachverfolgungseinrichtung MPP3 elektrisch angeschlossen. Die zweite Variante wird beispielsweise in einem hügeligen Gelände oder in einem Gelände verwendet, bei dem eine partielle Abschattung möglich ist. Durch die Verwendung einer Mehrzahl von Maximal-Leistungs-Punkt-Nachverfolgungseinrichtungen MPP1, MPP2, MPP3 kann sichergestellt werden, dass jeder Teilbereich 2, 4, 6 am optimalen Betriebspunkt arbeitet. Somit kann die Leistungsabgabe der Photovoltaikanlage 1' optimiert werden.

Es wird wieder auf Figur 1 Bezug genommen. Das erfindungsgemäße Verfahren zum Bestimmen der Leistungsfähigkeit von Komponenten einer Photovoltaikanlage und/oder der Photovoltaikanlage sowie die Leistungsfähigkeitsbestimmungsvorrichtung werden nachstehend detailliert beschrieben.

Die Leistungsfähigkeitsbestimmungsvorrichtung umfasst eine erste Referenzdatenermittlungseinrichtung Ref1 mit einer Referenzspannungsermittlungseinrichtung zum Ermitteln einer ersten Referenzspannung URef1 über einen ersten Referenzstrang BM21 - BM27. Ferner misst die erste Referenzdatenermittlungseinrichtung Ref1 die Temperatur TR1 des Photovoltaikmoduls BM22.

Eine erste Individualdatenermittlungseinrichtung Ind1 ermittelt mittels einer Stromzange den Strom II1, der im zweiten Strang AM21 - AM27 des ersten Teilbereichs 2 fließt. Ferner umfasst die erste Individualdatenermittlungseinrichtung Ind1 eine erste Individualsonneneinstrahlungsschätzeinrichtung SI1. Die Individualsonneneinstrahlungsschätzeinrichtung kann die Sonneneinstrahlung schätzen, die auf ein Photovoltaikmodul einfällt. Hierzu wird die Individualsonneneinstrahlungsschätzeinrichtung an einem Photovoltaikmodul derart befestigt, dass die Lichteinfallsfläche des Photovoltaikmoduls und der Individualsonneneinstrahlungsschätzeinrichtung im Wesentlichen parallel sind.

Während des Betriebes bestimmt die erste Referenzdatenermittlungseinrichtung Ref1 die Spannung über den zweiten Strang BM21 - BM27 des zweiten Teilbereichs 4. Die gemessene Spannung wird mit einem Zeitstempel in vorbestimmten Intervallen, beispielsweise von etwa einer Sekunde, in einer Speichereinrichtung gespeichert. Ferner speichert die erste Referenzdatenermittlungseinrichtung Ref1 die gemessene Temperatur TR1 in vorbestimmten Intervallen mit einem Zeitstempel in der Speichereinrichtung.

Die erste Individualdatenermittlungseinrichtung Ind1 ermittelt über einen vorbestimmten Zeitraum den Strom in einem Strang AM21 - AM27 sowie die Sonneneinstrahlung, die auf einen Modul des Stranges AM21 - AM27 einfällt, beispielsweise in Intervallen von etwa einer Sekunde über einen Zeitraum von mehreren Sekunden. Die während dieses Zeitraumes gemessenen Werte für den Strom und die Sonneneinstrahlung werden zusammen mit einem Zeitstempel und einer optionalen Strangkennung gespeichert. Sobald der vorbestimmte Zeitraum abgelaufen ist, wird die Individualdatenermittlungseinrichtung Ind1 an einen anderen Strang, beispielsweise an den Strang AM11 - AM17, angeschlossen. Es wird abermals der darin fließende Strom gemessen und die auf ein Photovoltaikmodul dieses Stranges AM11 - AM17 einfallende Sonnenstrahlung über einen vorbestimmten Zeitraum geschätzt. Die während dieses Zeitraumes gemessenen Werte für den Strom und die geschätzte Sonneneinstrahlung werden zusammen mit einem Zeitstempel und einer Strangkennung gespeichert. Die erste Individualdatenermittlungseinrichtung Ind1 kann an einen weiteren Strang, beispielsweise den Strang AM31 - AM37 angeschlossen werden. Auch für diesen Strang werden über einen vorbestimmten Zeitraum innerhalb vorbestimmter Zeitintervalle der in diesem Strang erfasste Strom ermittelt und die auf ein Photovoltaikmodul AM31 - AM37 einfallende Sonneneinstrahlung geschätzt. Diese Vorgehensweise kann weitergeführt werden, bis der Strom in allen Strängen ermittelt wurde und während der Strommessung die Sonneneinstrahlung auf ein Photovoltaikmodul des jeweiligen Stranges geschätzt wurde. Jede Messung wird über den vorbestimmten Zeitraum in vorbestimmten Intervallen durchgeführt. Alle ermittelten bzw. geschätzten Werte werden zusammen mit einer Kennung (Identifikation) des Stranges, beispielsweise Position, Nummer und dergleichen, abgespeichert.

Optional ist eine zweite Individualdatenermittlungseinrichtung Ind2 vorhanden, die in Figur 1 den Strom II2 in dem Strang CM21 - CM27 erfasst sowie mittels der Individualsonneneinstrahlungsschätzeinrichtung SI2 die Sonneneinstrahlung, die auf ein Modul des Stranges CM21 - CM27 einfällt, schätzt. Die Erfassung des Stroms und die Schätzung der Sonneneinstrahlung werden über einen vorbestimmten Zeitraum in vorbestimmten Intervallen durchgeführt und die erhaltenen Werte werden mit einem Zeitstempel und einer Strangkennung gespeichert. Nach dem vorbestimmten Zeitraum kann die zweite Individualdatenermittlungseinrichtung Ind2 den in einem anderen Strang fließenden Strom ermitteln und die auf ein Photovoltaikmodul des anderen Stranges, beispielsweise CM11 - CM17, auftreffende Sonneneinstrahlung schätzen. Diese Ermittlung und diese Schätzung werden abermals über einen vorbestimmten Zeitraum in vorbestimmten Intervallen durchgeführt und die erhaltenen Werte werden mit einem Zeitstempel und einer Strangkennung gespeichert. Die zweite Individualdatenermittlungseinrichtung Ind2 kann sukzessive bzw. nacheinander den Strom in einem Strang ermitteln und die auf ein Photovoltaikmodul in diesem Strang auftreffende Sonneneinstrahlung schätzen, der noch nicht durch eine andere Individualdatenermittlungseinrichtung erfasst wurde. Die erste Individualdatenermittlungseinrichtung Ind1 und die zweite Individualdatenermittlungseinrichtung Ind2 und eventuelle weitere Individualdatenermittlungseinrichtung können unabhängig voneinander Ströme in Strängen ermitteln und die auf ein Photovoltaikmodul in dem jeweiligen Messstrang einfallende Sonnenstrahlung schätzen und diese Werte mit einer Identifikation des Stranges (Position, Bezeichnung etc.) speichern.

Die erfassten Ströme in den Strängen und die geschätzte auf ein Photovoltaikmodul des jeweiligen Stranges einfallende Sonnenstrahlung sowie die entsprechenden Zeitstempel und Strangkennungen können an eine zentrale Auswerteeinrichtung gesendet werden. Das Übertragen der erfassten Daten kann mittels einer drahtgebundenen Schnittstelle oder einer Luftschnittstelle erfolgen.

Die erste Individualdatenermittlungseinrichtung Ind1, die zweite Individualdatenermittlungseinrichtung Ind2 und eventuell vorhandene weitere Individualdatenermittlungseinrichtungen speichern zusätzlich zu den erfassten Strömen und den geschätzten Sonneneinstrahlungswerten einen Zeitstempel und eine Strangkennung, so dass die erfassten Ströme und die geschätzte Sonneneinstrahlung einem Zeitpunkt und einem Strang zugeordnet werden können. Die erste Referenzdatenermittlungseinrichtung Ref1 misst die Spannung URef1 über den Strang BM21 - BM27, während die Individualdatenermittlungseinrichtungen Ind1 und Ind2 die Ströme in den Strängen erfassen und die auf ein Photovoltaikmodul des jeweiligen Stranges auftreffende Sonnenstrahlung schätzen. Auch die erste Referenzdatenerfassungseinrichtung speichert die in regelmäßigen Intervallen erfassten Spannungswerte URef1 zusammen mit einem Zeitstempel und optional auch die Strangkennung.

Folglich kann die Auswerteeinrichtung ermitteln, ob sich die Spannung URef1 zu einem vorbestimmten Zeitpunkt innerhalb eines Referenztoleranzbandes befunden hat. Falls sich die Spannung URef1 innerhalb des vorbestimmten Referenztoleranzbandes befindet, kann davon ausgegangen werden, dass die Maximal-Leistungs-Punkt-Nachverfolgungseinrichtung MPP1 korrekt arbeitet.

Ferner speichert die erste Referenzdatenerfassungseinrichtung Ref1 die erfasste Temperatur TR1 zusammen mit dem Zeitstempel.

Folglich kann die Auswerteeinrichtung ermitteln, ob sich der Strom II1 sowie die Sonneneinstrahlungsschätzung SI1 der Individualdatenerfassungseinrichtung zu einem vorbestimmten Zeitpunkt innerhalb eines Individualtoleranzbandes befunden hat. Defekte Stränge werden auf Grundlage der gewonnenen Strom- und extrapolierten Leistungsdaten identifiziert.
Zum Verbessern der Messgenauigkeit umfasst die erste Referenzdatenermittlungseinrichtung Ref1 den Strom IR1, der in dem Strang BM21 - BM27 fließt, in vorbestimmten Zeitintervallen. Der erfasste Strom IR1 wird zusammen mit einem Zeitstempel abgespeichert. Ferner umfasst die erste Referenzdatenermittlungseinrichtung Ref1 eine Referenzsonneneinstrahlungschätzeinrichtung SR1, die die Sonneneinstrahlung auf ein Modul BM21 - BM27 schätzt. Die Referenzsonneneinstrahlungschätzeinrichtung SR1 kann wie die Individualsonneneinstrahlungschätzeinrichtung SI1 aufgebaut sein und wie diese an einem Photovoltaikmodul angebracht werden. Ferner umfasst die erste Referenzdatenerfassungseinrichtung Ref1 eine Wetterstation W, die beispielsweise die Windrichtung, die Windgeschwindigkeit, die Lufttemperatur, die Luftfeuchte, den Druck etc. umfassen können. Ferner umfasst die erste Referenzdatenerfassungseinrichtung Ref1 eine Absolutsonneneinstrahlungsermittlungseinrichtung AS.

Die erste Referenzdatenermittlungseinrichtung Ref1 speichert die Wetterdaten und die absolute Sonneneinstrahlung, einschließlich des Sonneneinstrahlungswinkels, in vorbestimmten Intervallen zusammen mit einem Zeitstempel und einer optionalen Strangkennung.

Die Ermittlung der absoluten Sonneneinstrahlung, des Sonneneinfallswinkels und der Wetterdaten ermöglicht, dass die Auswerteeinrichtung die Leistungsfähigkeit der Stränge genauer prüfen kann. Insbesondere kann berücksichtigt werden, dass ein stärkerer Wind dazu führt, dass die Photovoltaikmodule stärker gekühlt werden und deren Temperatur abnimmt, wodurch der Wirkungsgrad der Photovoltaikmodule steigt. Die Wetterdaten können zum Prüfen der Stabilität und zum Prüfen der Plausibilität der Messwerte verwendet werden.

In der Variante gemäß Figur 1 sind alle Teilbereiche 2, 4, 6 und somit alle Stränge an einer Maximal-Leistungs-Nachverfolgungseinrichtung MPP1 angeschlossen. Somit können sich die erste Referenzdatenermittlungseinrichtung Ref1 und die erste Individualdatenermittlungseinrichtung Ind1 in unterschiedlichen Teilbereichen 2, 4 befinden, da an deren Strängen aufgrund der Parallelschaltung der Stränge an der Maximal-Leistungs-Punkt-Nachverfolgungseinrichtung gezwungenermaßen die gleiche Spannung anliegt.

Eine optionale dritte Referenzdatenermittlungseinrichtung Ustrang erfasst an der Maximal-Leistungspunkt-Nachverfolgungseinrichtung MPP1 die Spannung. Die dritte Referenzdatenermittlungseinrichtung kann in einer Minimallösung die Spannungserfassung URef1 der ersten Referenzdatenermittlungseinrichtung Ref1 ersetzen oder ergänzen. Weiterhin können durch einen Vergleich der Spannungen URef1 und UStrang Rückschlüsse auf die Funktionsfähigkeit einzelner Anlagenkomponenten gezogen werden. Da die dritte Referenzdatenermittlungseinrichtung Ustrang lediglich die Spannung erfasst, kann sie relativ leicht von einem Strang zum nächsten oder von einem Wechselrichter zum nächsten bewegt werden.

Figur 2 zeigt eine zweite Variante einer Photovoltaikanlage 1'. Wie zuvor erwähnt wurde ist der erste Teilbereich 2 an die erste Maximal-Leistungs-Punkt-Nachverfolgungseinrichtung MPP1, der zweite Teilbereich 4 an die zweite Maximal-Leistungs-Punkt-Nachverfolgungseinrichtung MPP2 und der dritte Teilbereich 6 an die dritte Maximal-Leistungs-Punkt-Nachverfolgungseinrichtung MPP3 angeschlossen. Somit sind die Stränge von unterschiedlichen Teilbereichen 2, 4, 6 elektrisch nicht parallel geschaltet. Jedoch sind nach wie vor die Stränge in den einzelnen Teilbereichen elektrisch parallel geschaltet. Das bedeutet, dass an allen Strängen eines Teilbereichs die im Wesentlichen - abgesehen von Verlusten in den Kabeln - gleiche Spannung herrscht. Jedoch unterscheiden sich die Strangspannungen der Teilbereiche, da sie jeweils an eine andere Maximal-Leistungs-Punkt-Nachverfolgungseinrichtung angeschlossen sind.

Die Funktionsweise der ersten Referenzdatenermittlungseinrichtung Ref1, der zweiten Referenzdatenermittlungseinrichtung Ref2, der ersten Individualdatenermittlungseinrichtung Ind1 und der zweiten Individualdatenermittlungseinrichtung Ind2 entspricht derjenigen, die unter Bezugnahme auf Figur 1 hinsichtlich der ersten Variante 1 beschrieben wurde. Da sich die Strangspannungen der einzelnen Teilbereichen 2, 4, 6 der zweiten Variante unterscheiden, müssen sich die Referenzdatenermittlungseinrichtung und die korrespondierende Individualdateneinrichtung(en) im gleichen Teilbereich 2, 6 befinden. Mit anderen Worten, die erste Referenzdateneinrichtung Ref1 befindet sich im ersten Teilbereich 2, und folglich kann die erste Individualdatenermittlungseinrichtung Ind1 lediglich Werte von Strängen und Photovoltaikmodulen im ersten Teilbereich 2 ermitteln bzw. schätzen. Die zweite Referenzdatenermittlungseinrichtung Ref2 befindet sich im dritten Teilbereichs 6. Folglich kann die zweite Individualdatenermittlungseinrichtung Ind2 lediglich Daten von Strängen im dritten Teilbereich 6 ermitteln. Falls die Stränge im zweiten Teilbereich 4 untersucht werden sollen, muss darin eine Referenzdatenermittlungseinrichtung und zumindest eine Individualdatenermittlungseinrichtung angeschlossen werden.

Es ist in der gesamten Photovoltaikanlage 1' lediglich eine Referenzdatenermittlungseinrichtung mit einer optionalen Wetterstation und einer optionalen Absolutsonneneinstrahlungsermittlungseinrichtung erforderlich, da sich die absolute Sonneneinstrahlung und die Wetterdaten nicht oder nur unwesentlich im Bereich der Photovoltaikanlage 1' ändern.

Eine optionale dritte Referenzdatenermittlungseinrichtung Ustrang erfasst an der Maximal-Leistungspunkt-Nachverfolgungseinrichtung MPP1 die Spannung. Die dritte Referenzdatenermittlungseinrichtung kann in einer Minimallösung die Spannungserfassung URef1 der erste Referenzdatenermittlungseinrichtung Ref1 ersetzen oder ergänzen. Weiterhin können durch einen Vergleich der Spannungen URef1 und UStrang Rückschlüsse auf die Funktionsfähigkeit einzelner Anlagenkomponenten gezogen werden. Da die dritte Referenzdatenermittlungseinrichtung Ustrang lediglich die Spannung erfasst, ist ein Ortswechsel innerhalb der Photovoltaikanlage und das erfassen einer Spannung an unterschiedlichen Stellen bzw. Komponenten leicht realisierbar.

Es versteht sich, dass die Auswerteeinrichtung die Teilbereiche 2, 4, 6 getrennt voneinander auswerten muss.

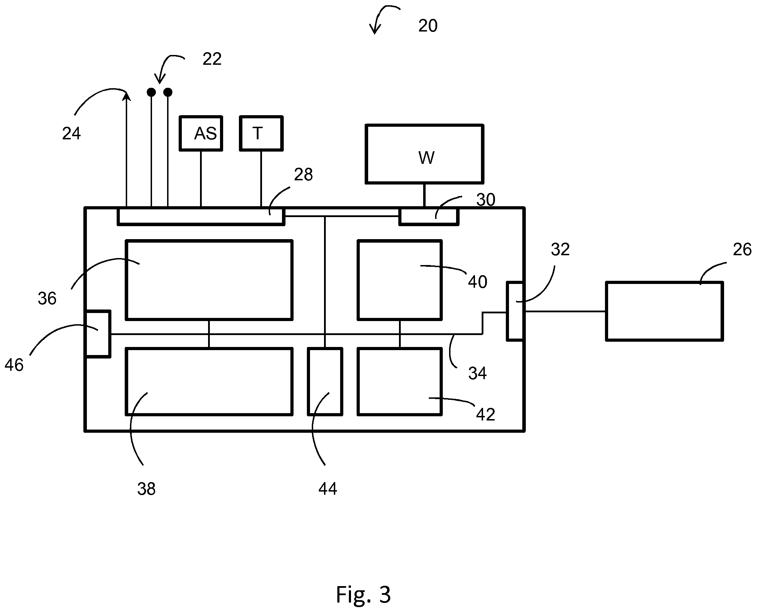

Es wird auf Figur 3 Bezug genommen, die schematisch eine Referenzdatenermittlungseinrichtung 20 zeigt. Die Referenzdatenermittlungseinrichtung umfasst ein Paar von Spannungsaufnehmern 22 und eine erste Schnittstelleneinheit 28, die eine Referenzspannungsermittlungseinrichtung bilden. Die erste Schnittstelleneinheit 28 ist über einen Bus 34 mit einer Verarbeitungseinrichtung 40 verbunden. Mit dem Bus 34 ist auch eine Zeitgebereinheit 44 verbunden. Die Verarbeitungseinheit 40 speichert die gemessenen Spannungswerte und das von der Zeitgebereinheit 44 ausgegebene Zeitsignal zusammen in einer Speichereinheit 42. Ferner umfasst die Referenzdatenermittlungseinrichtung 20 eine Anzeigeeinrichtung 36, zumindest eine Eingabeeinrichtung 38, beispielsweise eine Tastatur oder einen Barcodescanner, und eine Datenschnittstelle 46. Über die Datenschnittstelle 46 können die in der Speichereinrichtung 42 gespeicherten Daten drahtlos oder drahtgebunden ausgegeben werden.

Ferner umfasst die Referenzdatenermittlungseinrichtung 20 eine Stromzange 24, mit der der in einem Referenzstrang fließende Strom induktiv ermittelt werden kann. Die Stromzange 24 ist auch an die erste Schnittstelleneinrichtung 28 angeschlossen, die über den Bus 34 die gemessenen Stromwerte an die Verarbeitungseinheit 40 übermittelt. Die Verarbeitungseinheit 40 speichert die erfassten Stromwerte zusammen mit einem Zeitsignal bzw. einem Zeitstempel von der Zeitgebereinheit 44 in der Speichereinheit 42.

Ferner umfasst die Referenzdatenermittlungseinrichtung 20 eine Absolutsonneneinstrahlungsermittlungseinrichtung AS, die die absolute Sonneneinstrahlung bestimmt. Die Absolutsonneneinstrahlungsermittlungseinrichtung AS kann beispielsweise ein Pyranometer aufweisen. Die Absolutsonneneinstrahlungsermittlungseinrichtung AS ist auch über eine erste Schnittstelleneinheit 28 und den Bus 34 mit der Verarbeitungseinheit 40 verbunden. Die Verarbeitungseinheit 40 speichert die von der Absolutsonneneinstrahlungermittlungseinrichtung ermittelten Werte in vorgegebenen Zeitintervallen zusammen mit einem Zeitsignal bzw. Zeitstempel von der Zeitgebereinheit 44 im Speicher 42.

Darüber hinaus umfasst die Referenzdatenermittlungseinrichtung 40 einen Temperaturfühler T, der über die erste Schnittstelleneinheit 28 und den Bus 34 mit der Verarbeitungseinheit 40 verbunden ist. Die Verarbeitungseinheit 40 speichert die erfassten Temperaturwerte zusammen mit einem Zeitsignal oder Zeitstempel von der Zeitgebereinheit 44 in der Speichereinheit 42.

Ferner umfasst die Referenzdatenermittlungseinrichtung 20 eine Wetterstation W, die Wetterdaten, beispielsweise die Windrichtung, die Windgeschwindigkeit, die Lufttemperatur, die Luftfeuchte, den Luftdruck, etc. erfassen kann. Die Wetterstation 40 ist über eine zweite Schnittstelleneinheit 30 und den Bus 34 mit der Verarbeitungseinheit 40 verbunden. Die Verarbeitungseinheit 40 speichert die erfassten Wetterdaten zusammen mit einem Zeitsignal bzw. Zeitstempel von der Zeitgebereinheit 44 in der Speichereinrichtung 42 ab.

Die Referenzdatenermittlungseinrichtung 20 umfasst ferner eine Sonneneinstrahlungsschätzeinrichtung 26, die die Sonneneinstrahlung schätzen kann, die auf ein Photovoltaikmodul auftrifft. Die Sonneneinstrahlungsschätzeinrichtung 26 kann durch eine monokristalline Referenzzelle implementiert werden. Die Sonneneinstrahlungsschätzeinrichtung 26 ist über eine zweite Schnittstelleneinheit 32 und den Bus 34 an die Verarbeitungseinheit 40 angeschlossen. Die Verarbeitungseinheit 40 speichert die von der Sonneneinstrahlungsschätzeinrichtung ermittelten Sonneneinstrahlungswerte zusammen mit einem Zeitsignal bzw. einem Zeitstempel von der Zeitgebereinheit 44 in der Speichereinheit 42 ab.

Es versteht sich, dass die Referenzdatenermittlungseinrichtung 20 auch eine Strangkennung zusammen mit den zuvor genannten Werten abspeichern kann.

Über die Eingabeeinrichtung 38 können Daten eingegeben werden, die beispielsweise Daten über den gemessenen Strang umfassen, beispielsweise dessen Kennung. Die Anzeigeeinheit 36 kann den Verwender auffordern, bestimmte Handlungen durchzuführen, beispielsweise die Stromzange anzulegen. Nach Abschluss der Prüfung eines definierten Teils der Photovoltaikanlage oder der gesamten Photovoltaikanlage werden die Daten aus der Speichereinheit 42 über die Schnittstelleneinheit 46 beispielsweise an die Auswerteeinrichtung ausgegeben.

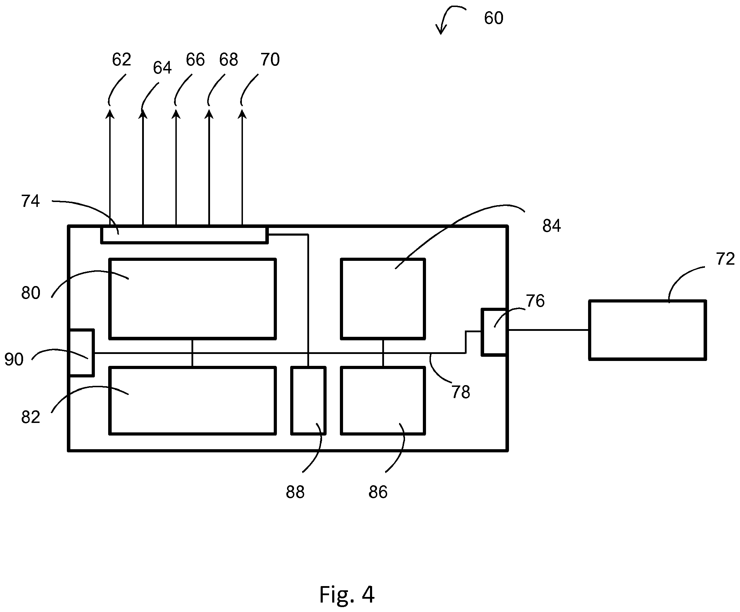

Figur 4 zeigt eine Individualdatenermittlungseinrichtung 60. Die Individualdatenermittlungseinrichtung umfasst eine Mehrzahl von Stromzangen 62, 64, 66, 68, 70, die je einen Strom in einem anderen Strang erfassen können. Beispielsweise können die Stromzangen an unterschiedlichen Strängen eines Tisches angebracht werden, um den jeweiligen darin fließenden Strom zu erfassen. Die Stromzangen sind an eine erste Schnittstelleneinheit 74 angeschlossen, die über einen Bus 78 mit einer Verarbeitungseinheit 84 verbunden ist. Die Verarbeitungseinheit 84 speichert die erfassten Ströme zusammen mit einem Zeitsignal oder einem Zeitstempel von der Zeitgebereinheit 88 in der Speichereinheit 86.

Die Individualdatenermittlungseinrichtung 60 umfasst eine Sonneneinstrahlungsschätzeinrichtung 72, die die auf ein Photovoltaikmodul auftreffende Sonneneinstrahlung schätzen kann. Die Sonneneinstrahlungsschätzeinrichtung 72 kann so aufgebaut sein, wie zuvor unter Bezugnahme auf Figur 3 hinsichtlich der Referenzdatenermittlungseinrichtung 20 beschrieben wurde. Die Sonneneinstrahlungsschätzeinrichtung 72 ist über eine zweite Schnittstelleneinrichtung 76 und dem Bus 78 mit der Verarbeitungseinheit 84 verbunden. Die Verarbeitungseinrichtung 84 speichert die erfasste Sonneneinstrahlung und ein Zeitsignal bzw. einen Zeitstempel 88 in der Speichereinrichtung 86.

Die Anzeigeeinheit 80 kann einen Benutzer auffordern, Handlungen vorzunehmen, beispielsweise die Stromzangen 62, 64, 66, 68, 70 an unterschiedlichen Strängen anzuordnen und die Sonneneinstrahlungsschätzeinrichtung 72 an einem Photovoltaikmodul anzuordnen. Über eine Eingabeeinrichtung 82, beispielsweise eine Tastatur und/oder in einem Barcodescanner, kann der Benutzer angeben, welche Stränge und welcher Tisch gerade geprüft werden. Dies kann mittels einer Kennung erfolgen, die zusammen mit den zuvor genannten Werten gespeichert wird.

Über eine Schnittstelleneinrichtung 90 kann die Individualdatenermittlungseinrichtung 60 die in der Datenspeichereinheit 86 gespeicherten Daten drahtlos oder drahtgebundenen an die Auswerteeinrichtung übergeben.

Sowohl die Referenzdatenermittlungseinrichtung 20 als auch die Individualdatenermittlungseinrichtung 60 können durch einen Computer, Kleincomputer, Diagnosegerät und dergleichen aufgebaut sein. Der Fachmann weiß, dass zum Erfassen der Messwerte weitere Komponenten, beispielsweise Analog-/Digital-Wandler, Verstärker und dergleichen erforderlich sind. Ferner müssen die Referenzdatenermittlungseinrichtung 20 und die Individualdatenermittlungseinrichtung 60 nicht durch diskrete Einheiten aufgebaut sein und können durch integrierte Komponenten realisiert werden.

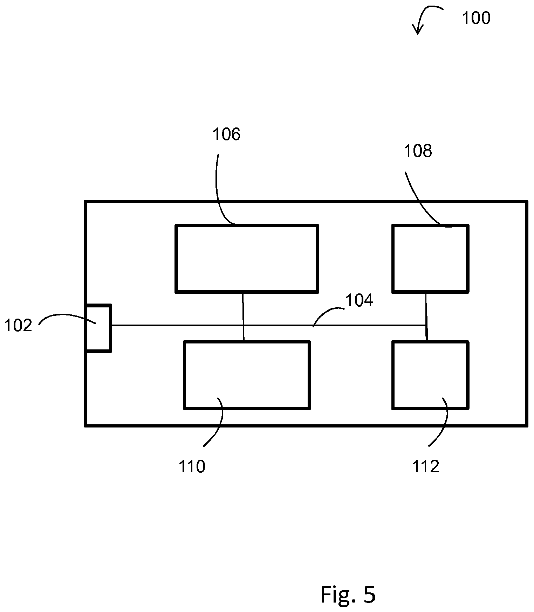

Figur 5 zeigt schematisch eine Auswerteeinrichtung 100. Die Auswerteeinrichtung 100 umfasst eine Schnittstelleneinheit 102, einen Bus 104, eine Ausgabeeinheit 106, eine Eingabeeinheit 110, eine Verarbeitungseinheit 108 und eine Speichereinheit 112. Die Referenzdaten und die Individualdaten werden über die Schnittstelle 102 eingegeben und in der Speichereinheit 112 gespeichert. Die Verarbeitungseinheit 108 prüft ob sich die Referenzdaten innerhalb eines Referenztoleranzbandes befinden und/oder ob sich die Individualdaten innerhalb eines Individualtoleranzbandes befinden. Falls dies der Fall ist, werden die erfassten Ströme in den einzelnen Strängen verglichen, um so Stränge zu ermitteln, deren Leistungsfähigkeit zu niedrig ist. Die Auswerteeinrichtung 100 berücksichtigt beim Vergleichen der Ströme die Temperatur des Photovoltaikmoduls und die von der jeweiligen Individualsonneneinstrahlungsschätzeinrichtung 72 ermittelte Sonneneinstrahlung. Ferner können alle erfassten Daten mittels der erfassten absoluten Sonneneinstrahlung auf die Standardtestbedingungen umgerechnet werden, wodurch die Messergebnisse normiert werden können.

Die vorliegende Erfindung hat den Vorteil, dass der Betrieb der Photovoltaikanlage nicht unterbrochen werden muss, während deren Leistungsfähigkeit ermittelt wird. Ferner können eine Mehrzahl von Messstränge mittels einer Mehrzahl von Stromzangen und/oder Individualdatenerfassungseinrichtungen gleichzeitig überprüft werden, wodurch einerseits eine feine örtliche Auflösung entsteht, da eine Vielzahl von Komponenten individuell geprüft werden und andererseits das erfindungsgemäße Verfahren zügig durchgeführt werden kann. Dadurch wird vermieden, dass im Falle der Ermittlung einer verringerten Leistungsfähigkeit eine große Anzahl von Photovoltaikmodulen ausgetaucht werden muss, obwohl lediglich nur eine kleine Anzahl ausgetauscht werden müsste. Die Erfindung erlaubt eine Extrapolation der ermittelten Strangleistungsdaten auf Standard-Test-Bedingungen, auf welche sich herstellerseitig angegebene Leistungsdaten von Photovoltaikmodulen typischerweise beziehen.

## Patentansprüche

1. Verfahren zum Bestimmen der Leistungsfähigkeit von Komponenten einer Photovoltaikanlage (1) und/oder der Photovoltaikanlage (1), die eine Mehrzahl von Strängen aufweist, in denen je eine Mehrzahl von Photovoltaikmodulen (AM, BM, CM) in Serie geschaltet ist, wobei die Mehrzahl von Strängen an zumindest einen Wechselrichter (WR) angeschlossen ist und wobei das Verfahren die folgenden Schritte aufweist:
- Erzeugen von Referenzdaten;
- Erzeugen von Individualdaten; und
- Auswerten der Referenzdaten und der Individualdaten;
wobei der Schritt des Erzeugens von Individualdaten im gleichen Zeitraum wie der Schritt des Erzeugens von Referenzdaten durchgeführt wird und
wobei der Schritt des Erzeugens von Referenzdaten folgende Schritte aufweist:
- Ermitteln einer Spannung über einen ersten Referenzstrang (AM31-AM37; BM21-BM27); und/oder
- Ermitteln eines Stroms, der in dem ersten Referenzstrang fließt;
wobei der Schritt des Erzeugens von Individualdaten folgende Schritte aufweist:
- Ermitteln von Strom, der in einem Messstrang (AM21-AM27; CM21-CM27) einer Mehrzahl von Messsträngen fließt; und
- Ermitteln eines Schätzwertes der Sonneneinstrahlung, die auf zumindest ein Photovoltaikmodul des Messstranges (AM21-AM27; CM21-CM27) während der Ermittlung des Stroms in dem jeweiligen Messstrang auftrifft;
wobei der Schritt des Ermitteins der Referenzdaten und/oder der Schritt des Ermitteins der Individualdaten den Schritt des Ermitteins der Temperatur zumindest eines Photovoltaikmoduls aufweisen;
wobei der Schritt des Erzeugens von Individualdaten nacheinander für weitere Messstränge der Mehrzahl von Messsträngen (AM21-AM27; CM21-CM27) durchgeführt wird,
wobei die Photovoltaikanlage derart gesteuert wird, dass die Komponenten der Photovoltaikanlage (1) einen derartigen Strom und eine derartige Spannung erzeugen, dass sich die Komponenten der Photovoltaikanlage und/oder die Photovoltaikanlage (1) im Wesentlichen am Maximal-Leistungs-Punkt befinden; und
wobei der Schritt des Auswertens der Referenzdaten und der Individualdaten folgende Schritte umfasst:
- Prüfen, ob sich die Referenzdaten während eines vorbestimmten Zeitintervalls innerhalb eines Referenztoleranzbandes befinden und/oder ob sich die Individualdaten während eines vorbestimmten Zeitintervalls innerhalb eines Individualtoleranzbandes befinden; und
- falls sich die Referenzdaten während des vorbestimmten Zeitintervalls innerhalb des Referenztoleranzbandes befinden und/oder sich die Individualdaten während des vorbestimmten Zeitintervalls innerhalb des Individualtoleranzbandes befinden, Ermitteln der Leistungsfähigkeit von Messsträngen, deren Ströme während des vorbestimmten Zeitintervalls ermittelt wurden.

2. Verfahren nach Anspruch 1, wobei der Schritt des Ermitteins von Strom den Schritt des gleichzeitigen Ermitteins von Strömen umfasst, die in mehreren Messsträngen der Mehrzahl von Messsträngen fließen, wobei der Schritt des gleichzeitigen Ermittelns von Strömen nacheinander für mehrere weitere Messsträngen der Mehrzahl von Messsträngen durchgeführt wird.

3. Verfahren nach Anspruch 1 oder 2, wobei der Schritt des Erzeugens von Referenzdaten zumindest einen der folgenden Schritte aufweist:
- Ermitteln eines Stroms, der in einem zweiten Referenzstrang fließt;
- Ermitteln eines Schätzwertes der Sonneneinstrahlung, die auf zumindest ein Photovoltaikmodul in dem ersten Referenzstrang auftrifft;
- Ermitteln einer Spannung über einen zweiten Referenzstrang;
- Ermitteln der Temperatur zumindest eines Photovoltaikmoduls in dem zweiten Referenzstrang und/oder in einem zweiten Messstrang; und
- Ermitteln eines Schätzwertes der Sonneneinstrahlung, die auf zumindest ein Photovoltaikmodul in dem zweiten Referenzstrang auftrifft.

4. Verfahren nach einem der Ansprüche 1 bis 3, wobei der Schritt des Erzeugens von Referenzdaten zumindest einen der folgenden Schritte aufweist:
- Ermitteln von Wetterdaten; und
- Ermitteln der absoluten Sonneneinstrahlung.

5. Verfahren nach einem der vorangegangenen Ansprüche, wobei der Schritt des Ermitteins einer Spannung über einen ersten und/oder zweiten Referenzstrang den Spannungswert an der jeweiligen Maximal-Leistungs-Punkt-Nachverfolgungseinrichtung oder an einer damit elektrisch verbundenen Leitung ermittelt.

6. Verfahren nach einem der vorangegangenen Ansprüche, wobei der Schritt des Ermitteins von Individualdaten zumindest einen der folgenden Schritte aufweist:
- Eingeben von Daten, die eine Zuordnung des Messstranges zu dem ermittelten Strom, der im Messstrang fließt, ermöglichen; und
- Bestimmen der Position des Messstranges, dessen Strom erfasst wird.

7. Verfahren nach einem der vorangegangenen Ansprüche, wobei der Schritt des Auswertens der Individualdaten und/oder der Referenzdaten den Schritt des Normierens der erfassten Referenzdaten und/oder der erfassten Individualdaten umfasst, wobei die Bestimmung der Leistungsfähigkeit der Photovoltaikanlage und/oder der Komponenten der Photovoltaikanlage auf Grundlage der normierten Referenzdaten und/oder normierten Individualdaten erfolgt.

8. Verfahren nach Anspruch 7, wobei der Schritt des Auswertens der Referenzdaten und/oder der Individualdaten den Schritt des Umrechnens der erfassten Referenzdaten und/oder der erfassten Individualdaten in die Standard-Test-Bedingungen umfasst, wobei die Bestimmung der Leistungsfähigkeit der Photovoltaikanlage und/oder der Komponenten der Photovoltaikanlage auf Grundlage der in die Standard-Messbedingungen umgerechneten Referenzdaten und/oder auf Grundlage der in die Standard-Messbedingungen umgerechneten Individualdaten erfolgt.

9. Verfahren nach einem der vorangegangenen Ansprüche, ferner umfassend den Schritt des Zuführens des mittels der Photovoltaikmodule (AM, BM, CM) erzeugten Stroms zu dem Strangwechselrichter (WR) während des Ermitteins der Individualdaten.

## Claims

1. Method for determining the performance of components of a photovoltaic plant (1) and/or of the photovoltaic plant (1) comprising a plurality of strings, wherein in each of them a plurality of photovoltaic modules (AM, BM, CM) is connected in series, wherein the plurality of strings is connected to at least one inverter (WR) and wherein the method comprises the following steps:
- generating of reference data;
- generating of individual data; and
- analyzing of the reference data and the individual data;
wherein the step of generating individual data is performed in the same time span as the step of generating reference data and wherein the step of generating of reference data comprises the following steps:
- determining a voltage over the first reference string (AM31 - AM37; BM21 - BM 27): and/or
- determining of a current flowing in the first reference string;
wherein the step of generating individual data comprises the following steps:
- determining of a current flowing in one measurement string (AM21 - AM27; CM21 - CM27) of a plurality of measurement strings; and
- determining of an estimated value of the incident solar radiation impinging on at least one photovoltaic module of the measurement string (AM21 - AM27; CM21 - CM27) during determining of the current in the respective measurement string;
wherein the step of determining of the reference data and/or the step of determining the individual data comprises the step of determining the temperature of at least one photovoltaic module;
wherein the step of generating individual data is performed successively for two further measurement strings of the plurality of measurement strings (AM21 - AM27; CM21 - CM 27),
wherein the photovoltaic plant is controlled such that the components of the photovoltaic plant (1) generate such a current and such a voltage that the components of the photovoltaic plant and/or the photovoltaic plant (1) operates essentially at the point of maximal power; and
wherein the step of analyzing the reference data and individual data comprises the following steps:
- verifying, whether the reference data are during a predetermined time span within a reference tolerance range and/or whether the individual data are during a predetermined time interval within a individual tolerance range; and
- if the reference data are within the predetermined time interval within the reference tolerance range and/or the individual data are within the predetermined time span within the individual tolerance range, determining the performance of the measurement strings of which the currents are determined during the predetermined time span.

2. Method according to claim 1, wherein the step of determining of current comprises the step of simultaneously determining of currents flowing in multiple of the plurality of the measurement strings, wherein the step of simultaneously determining of currents is performed successively for multiple further measurement strings of the plurality of measurement strings.

3. Method according to claim 1 or 2, wherein the step of generating of reference data comprises at least one of the following steps:
- determining of a current flowing in a second reference string;
- determining an estimated value of the incident solar radiation impinging on at least one photovoltaic module in the first reference string;
- determining of a voltage over a second reference string;
- determining of the temperature of at least one photovoltaic module in the second reference string and/or in the second measurement string; and
- determining of an estimated value of the incident solar radiation impinging on at least one photovoltaic module in the second reference string.

4. Method according to one of claims 1 to 3, wherein the step of generating of reference data comprises at least one of the following steps:
- determining of weather data; and
- determining the absolute incident solar radiation.

5. Method according to one of the preceding claims, wherein the step of determining of a voltage over a first and/or second reference string determines the voltage value at the respective maximum-power-point-tracing-device or at a conduit electrical connected therewith.

6. Method according to one of the preceding claims, wherein the step of determining of individual data comprises at least one of the following steps:
- inputting of data enabling the assignment of a measurement string to the determined current flowing in the measurement string; and
- determining the position of the measurement string whose current is determined.

7. Method according to one of the preceding claims, wherein the step of evaluating of the individual data and/or of the reference data comprises the step of scaling of determined reference data and/or of the determined individual data, wherein the determining of the power of the photovoltaic plant and/or of components of the photovoltaic plant is performed based on the scaled reference data and/or scaled individual data.

8. Method according to claim 7, wherein the step of evaluating reference data and/or reference data comprises the step of converting of the determined reference data and/or the determined individual data into standard test conditions, wherein the determining of the performance of the photovoltaic plant and/or of the components of the photovoltaic plant is performed based on reference data converted into standard test conditions and/or based on individual data converted into standard test conditions.

9. Method according one of the preceding claims, further comprising the step of supplying the current generated by the photovoltaic modules (AM, BM, CM) to the string inverter (WR) during the determining of the individual data.

## Revendications

1. Procédé pour déterminer la performance de composants d'une installation photovoltaïque (1) et/ou de l'installation photovoltaïque (1) qui comprend une pluralité de tronçons, dans lequel, dans chacun d'eux, les modules d'une pluralité de modules photovoltaïques (AM, BM, CM) sont connectés en série, dans lequel la pluralité de tronçons est connectée à au moins un inverseur (WR) et dans lequel le procédé comprend les étapes qui suivent :
- la génération de données de référence ;
- la génération de données individuelles ; et
- l'analyse des données de référence et des données individuelles ;
dans lequel :
l'étape de génération de données individuelles est réalisée dans le même laps de temps que l'étape de génération de données de référence et dans lequel l'étape de génération de données de référence comprend les étapes qui suivent :
- la détermination d'une tension aux bornes du premier tronçon de référence (AM31 - AM37 ; BM21 - BM27) ; et/ou
- la détermination d'un courant qui circule dans le premier tronçon de référence ; dans lequel :
l'étape de génération de données individuelles comprend les étapes qui suivent :
- la détermination d'un courant qui circule dans un tronçon de mesure (AM21 - AM27 ; CM21 - CM27) d'une pluralité de tronçons de mesure ; et
- la détermination d'une valeur estimée du rayonnement solaire incident qui arrive en incidence sur au moins un module photovoltaïque du tronçon de mesure (AM21 - AM27 ; CM21 - CM27) pendant la détermination du courant dans le tronçon de mesure respectif ; dans lequel :
l'étape de détermination des données de référence et/ou l'étape de détermination des données individuelles comprennent/comprend l'étape de détermination de la température d'au moins un module photovoltaïque ; dans lequel :
l'étape de génération de données individuelles est réalisée successivement pour deux autres tronçons de mesure de la pluralité de tronçons de mesure (AM21 - AM27 ; CM21 - CM27) ; dans lequel :
l'installation photovoltaïque est commandée de telle sorte que les composants de l'installation photovoltaïque (1) génèrent un courant et une tension qui soient tels que les composants de l'installation photovoltaïque et/ou l'installation photovoltaïque (1) fonctionnent/fonctionne essentiellement au point de puissance maximale ; et dans lequel :
l'étape d'analyse des données de référence et des données individuelles comprend les étapes qui suivent :
- la vérification de si oui ou non les données de référence sont pendant un laps de temps prédéterminé à l'intérieur d'une plage de tolérance de référence et/ou de si oui ou non les données individuelles sont pendant un intervalle temporel prédéterminé à l'intérieur d'une plage de tolérance individuelle ; et
- si les données de référence sont à l'intérieur de l'intervalle temporel prédéterminé à l'intérieur de la plage de tolérance de référence et/ou si les données individuelles sont à l'intérieur du laps de temps prédéterminé à l'intérieur de la plage de tolérance individuelle, la détermination de la performance des tronçons de mesure dont les courants sont déterminés pendant le laps de temps prédéterminé.

2. Procédé selon la revendication 1, dans lequel l'étape de détermination de courant comprend l'étape de détermination simultanée de courants qui circulent dans de multiples tronçons de la pluralité des tronçons de mesure, dans lequel l'étape de détermination simultanée de courants est réalisée successivement pour de multiples autres tronçons de mesure de la pluralité de tronçons de mesure.

3. Procédé selon la revendication 1 ou 2, dans lequel l'étape de génération de données de référence comprend au moins l'une des étapes qui suivent :
- la détermination d'un courant qui circule dans un deuxième tronçon de référence ;
- la détermination d'une valeur estimée du rayonnement solaire incident qui arrive en incidence sur au moins un module photovoltaïque dans le premier tronçon de référence ;
- la détermination d'une tension aux bornes d'un deuxième tronçon de référence ;
- la détermination de la température d'au moins un module photovoltaïque dans le deuxième tronçon de référence et/ou dans le deuxième tronçon de mesure ; et
- la détermination d'une valeur estimée du rayonnement solaire incident qui arrive en incidence sur au moins un module photovoltaïque dans le deuxième tronçon de référence.

4. Procédé selon l'une des revendications 1 à 3, dans lequel l'étape de génération de données de référence comprend au moins l'une des étapes qui suivent :
- la détermination de données météorologiques ; et
- la détermination du rayonnement solaire incident absolu.

5. Procédé selon l'une des revendications précédentes, dans lequel l'étape de détermination d'une tension aux bornes d'un premier et/ou deuxième tronçon de référence détermine la valeur de tension au niveau du dispositif de traçage de point de puissance maximale respectif ou au niveau d'un conduit électrique qui lui est connecté

6. Procédé selon l'une des revendications précédentes, dans lequel l'étape de détermination de données individuelles comprend au moins l'une des étapes qui suivent :
- l'entrée de données permettant l'attribution d'un tronçon de mesure au courant déterminé qui circule dans le tronçon de mesure ; et
- la détermination de la position du tronçon de mesure dont le courant est déterminé.

7. Procédé selon l'une des revendications précédentes, dans lequel l'étape d'évaluation des données individuelles et/ou des données de référence comprend l'étape de mise à l'échelle des données de référence déterminées et/ou des données individuelles déterminées, dans lequel la détermination de la puissance de l'installation photovoltaïque et/ou de composants de l'installation photovoltaïque est réalisée sur la base des données de référence mises à l'échelle et/ou des données individuelles mises à l'échelle.

8. Procédé selon la revendication 7, dans lequel l'étape d'évaluation des données de référence et/ou des données individuelles comprend l'étape de conversion des données de référence déterminées et/ou des données individuelles déterminées selon des conditions de test standards, dans lequel la détermination de la performance de l'installation photovoltaïque et/ou des composants de l'installation photovoltaïque est réalisée sur la base de données de référence converties selon des conditions de test standards et/ou sur la base de données individuelles converties selon des conditions de test standards.

9. Procédé selon l'une des revendications précédentes, comprenant en outre l'étape d'alimentation du courant qui est généré par les modules photovoltaïques (AM, BM, CM) sur l'inverseur de tronçon (WR) pendant la détermination des données individuelles.
